**Europäisches Patentamt**

**European Patent Office**

**Office européen des brevets**

(19)

(11) Veröffentlichungsnummer: **0 239 843**
**B1**

(12) # EUROPÄISCHE PATENTSCHRIFT

(45) Veröffentlichungstag der Patentschrift:
24.10.90

(51) Int. Cl.⁵: **G21C 3/62**

(21) Anmeldenummer: **87103503.6**

(22) Anmeldetag: **11.03.87**

(54) Kernbrennstoffsinterkörper und Verfahren zu seiner Herstellung.

(30) Priorität: **24.03.86 DE 3610899**

(43) Veröffentlichungstag der Anmeldung:
**07.10.87 Patentblatt 87/41**

(45) Bekanntmachung des Hinweises auf die Patenterteilung:
**24.10.90 Patentblatt 90/43**

(84) Benannte Vertragsstaaten:
**BE DE ES FR GB SE**

(56) Entgegenhaltungen:
**FR-A- 1 447 546**
**FR-A- 1 503 127**
**US-A- 3 372 213**
**US-A- 3 520 958**

**EURATOM INFORMATION, Band 7, Nr. 12,**
**November 1969, Seite 739, Reactor Technology**
**Publications; M.G. ANDREWS et al.: "Burnable poison**
**additions to UO2"**

(73) Patentinhaber: **Siemens Aktiengesellschaft,**
**Wittelsbacherplatz 2, D-8000 München 2(DE)**

(72) Erfinder: **Peehs, Martin, Dr., Dipl.-Phys., Falkenstrasse 3,**
**D-8526 Bubenreuth(DE)**
Erfinder: **Dörr, Wolfgang, Dr., Dipl.-Phys.,**
**Von-Weber-Strasse 51a, D-8522 Herzogenaurach(DE)**

## Beschreibung

Die Erfindung betrifft ein Verfahren zum Herstellen eines Kernbrennstoffsinterkörpers entsprechend dem Gattungsbegriff des Patentanspruchs 1.

Ein tablettenartiger Kernbrennstoffsinterkörper samt Verfahren zu seiner Herstellung ist aus der deutschen Patentschrift 3 144 684 bekannt. Das Neutronengift in der Sintermatrix besteht aus einem Seltenerdelement, insbesondere aus Gadolinium. Zur Herstellung dieses Kernbrennstoffsinterkörpers wird $UO_2$-Ausgangspulver mit Seltenerdoxidpulver ($Gd_2O_3$) gemischt und die Mischung zu einem Preßkörper kompaktiert, der in einer reduzierend wirkenden Sinteratmosphäre einer Wärmebehandlung im Temperaturbereich von 1500°C bis 1750°C unterzogen wird. Der Haltezeitraum für diese Temperatur kann im Bereich von einer Stunde bis 10 Stunden liegen, während die Aufheizgeschwindigkeit der Preßkörper im Bereich von 1°C/min bis 10°C/min liegen kann.

Brennstäbe von Kernreaktorbrennelementen sind mit solchen Kernbrennstoffsinterkörpern gefüllt. Die Seltenerdelemente und insbesondere das Gadolinium sind neutronenphysikalisch abbrennbare Neutronengifte, die nach einer gewissen Einsatzzeit des Kernreaktorbrennelementes in einem Kernreaktor ihre Neutronen vergiftende Eigenschaft verlieren. Ein Kernreaktorbrennelement wird z.B. während drei aufeinander folgender, in der Regel gleich langer Brennelementzyklen im Kernreaktor eingesetzt. Am Ende eines Brennelementzyklus wird ein Teil der Kernreaktorbrennelemente im Kernreaktor durch frische, unbestrahlte Kernreaktorbrennelemente ersetzt. Sind die Brennelementzyklen verhältnismäßig lang, brennen die Seltenerdelemente und insbesondere das Gadolinium in den frisch in den Kernreaktor eingesetzten Kernreaktorbrennelementen bis zum Ende ihres ersten Brennelementzyklus nicht vollständig aus. Es verbleibt eine sogenannte Restvergiftung, die zu unerwünschten Reaktivitätsverlusten zu Beginn des nachfolgenden Brennelementzyklus im Kernreaktor führt.

Nach der FR-A 1 503 127 ist nicht nur Gadolinium, sondern auch Bor ein neutronenphysikalisch abbrennbares Neutronengift in einem Kernbrennstoffsinterkörper. Während Gadolinium für Brennelementzyklen von 12 Monaten eine optimale Abbrandcharakteristik hat, ist die Abbrandcharakteristik für Bor für Brennelementzyklen von 18 Monaten optimal. Deshalb können mit Kernbrennstoffsinterkörpern, die Bor als abbrennbares Neutronengift enthalten, die angesprochenen Reaktivitätsverluste bei verhältnismäßig langen Brennelementzyklen vermieden werden.

Aus der FR-A 1 447 546 ist ein $UO_2$-Sinterkörper bekannt, der Urantetraborid und/oder Thoriumtetraborid in seiner Sintermatrix enthält.

Ein Verfahren der eingangs erwähnten Art wird erfindungsgemäß entsprechend dem kennzeichnenden Teil des Patentanspruchs 1 durchgeführt.

Es hat sich gezeigt, daß das Bor auf diese Weise beim Sintern praktisch nicht entweicht, sondern in der Sintermatrix des gewonnenen Kernbrennstoffsinterkörpers verbleibt. Dies ist von Bedeutung, da der Borgehalt in der Sintermatrix vorteilhafterweise maximal 5 Gew.-%, günstigerweise 100 ppm bis 1 Gew.-% beträgt.

Die chemischen Verbindungsformen $UB_x$ und $B_4C$ sind in günstiger Weise über die gesamte Sintermatrix des Kernbrennstoffsinterkörpers verteilt. Auch ist diese Verteilung homogen.

Ferner ist es günstig, Mischungskomponenten $UO_2$-, $PuO_2$-, $ThO_2$-, $(U, Pu)O_2$- und $(U, Th)O_2$-Pulver zu verwenden, deren Gesamtgehalt an Fluor kleiner als 100 ppm ist. Durch den geringen Fluorgehalt wird ein Entweichen des Bors beim Sintern noch zusätzlich unterdrückt.

Auch ist es vorteilhaft, wenn die Mischungskomponenten $UO_2$-, $PuO_2$-, $ThO_2$-, $(U,Pu)O_2$- und $(U, Th)O_2$-Pulver einen mittleren Partikeldurchmesser von 5 µm bis 100 µm haben. Ein solches Pulver ist besonders rieselfähig und fördert dadurch das homogene Einmischen des $UB_x$- und des $B_4C$-Pulvers.

Es ist günstig, das Sintern entsprechend der in der deutschen Patentschrift 3 142 447 beschriebenen Verfahrensweise durchzuführen und den Preßkörper, der auch $UB_x$- und/oder $B_4C$-Pulver enthält, der Wärmebehandlung bei einer Behandlungstemperatur im Bereich von 1000°C bis 1400°C zunächst in oxidierend und anschließend in reduzierend wirkender Gasatmosphäre zu unterwerfen. Als oxidierend wirkende Gasatmosphäre ist z.B. Kohlendioxid und als reduzierend wirkende Gasatmosphäre Wasserstoff besonders gut geeignet. Enthält der Presskörper $B_4C$, so werden bei Verwendung von $CO_2$ als oxidierend wirkender Gasatmosphäre Borverluste beim Sintern sogar besonders sicher vermieden.

Aus der US-Patentschrift 3 427 222 (Example I) ist zwar ein Kernbrennstoffsinterkörper aus $UO_2$ bekannt mit Bor als Neutronengift, dieses Bor ist jedoch nicht in der Sintermatrix des Kernbrennstoffsinterkörpers eingebaut, sondern befindet sich in einer Oberflächenschicht, die Borverbindungen enthält und die auf dem Kernbrennstoffsinterkörper beispielsweise durch Aufsprühen aufgebracht ist.

Das Aufbringen dieser Oberflächenschicht auf den Kernbrennstoffsinterkörper ist jedoch ein zusätzlicher Verfahrensschritt, der sehr aufwendig ist, da eine vorgegebene Schichtdicke sehr genau eingehalten werden muß. Außerdem ist die Oberflächenschicht sehr porös und muß deshalb durch einen besonderen Schutzüberzug gegen Aufnahme von Feuchtigkeit geschützt werden.

Aus «Euratom Information», Band 7, Nr. 12 (1969), Seite 739 ist das Sintern eines $UO_2$-$B_4C$-Preßkörpers in einer Sinteratmosphäre, die eine $CO_2$-CO-Mischatmosphäre ist, und aus der US-A 3 520 958 das Sintern eines $UO_2$-$UB_4$-Preßkörpers in einer Sinteratmosphäre aus CO oder $H_2$ bekannt. Diese Sinteratmosphären wirken jedoch ausschließlich reduzierend und nicht oxidierend.

Die Erfindung und ihre Vorteile seien anhand eines Ausführungsbeispiels näher erläutert:

$UO_2$-Pulver mit einem mittleren Partikeldurchmesser von 15 µm und mit 60 ppm Fluorgehalt wird nach dem sogenannten AUC-Verfahren gemäß «Gmelin Handbuch der anorganischen Chemie, Uran, Ergänzungsband A3, pp 101 bis 104, 1981» durch entsprechende Wahl der Verweilzeit des Pulvers unter Pyrohydrolysebedingungen gewonnen.

Dieses $UO_2$-Pulver wird mit 300 ppm $B_4C$-Pulver innig gemischt, dessen Partikelgrößen im Bereich von 2 bis 100 µm liegen. Das Pulvergemisch wird ebenfalls zu Preßlingen mit einer Dichte von 5,6 g/cm³ kompaktiert. Die Preßlinge werden sodann zunächst in einem Sinterofen in einer aus $CO_2$ bestehenden oxidierend wirkenden Sinteratmosphäre zwei Stunden lang bei 1150°C gesintert. Anschließend werden die aus den Preßlingen entstandenen Sinterkörper unter Beibehaltung ihrer Temperatur von 1150°C im Sinterofen eine halbe Stunde lang einer Wärmebehandlung in einer reduzierend wirkenden, aus reinem Wasserstoff bestehenden Gasatmosphäre unterzogen.

Die Dichte der hierdurch schließlich gewonnenen Kernbrennstoffsinterkörper beträgt 10,5 g/cm³. Die Kernbrennstoffsinterkörper enthalten 235 ppm Bor in homogener Verteilung in der gesamten Sintermatrix.

## Patentansprüche

1. Verfahren zum Herstellen eines Kernbrennstoffsinterkörpers aus $UO_2$ oder den Mischoxiden $(U, Pu)O_2$ und $(U, Th)O_2$ mit Neutronengift, das in der chemischen Verbindungsform $UB_x$ (x = 2;4 und/oder 12) und/oder $B_4C$ in der Sintermatrix eingebaut ist, durch Sintern eines Preßkörpers aus einer Mischung mindestens einer der Mischungskomponenten $UO_2$-, $PuO_2$-, $ThO_2$-, $(U, Pu)O_2$- und $(U, Th)O_2$-Pulver mit $UB_x$-Pulver (x = 2;4 und/oder 12) und/oder $B_4C$-Pulver dadurch gekennzeichnet, daß der Preßkörper bei einer Behandlungstemperatur im Bereich von 1000°C bis 1400°C zunächst in einer oxidierend wirkenden Sinteratmosphäre gesintert und anschließend in einer reduzierend wirkenden Gasatmosphäre wärmebehandelt wird.

2. Verfahren nach Anspruch 1, dadurch gekennzeichnet, daß als oxidierend wirkende Sinteratmosphäre Kohlendioxid und als reduzierend wirkende Gasatmosphäre Wasserstoff verwendet werden.

3. Verfahren nach Anspruch 1, dadurch gekennzeichnet, daß Mischungskomponenten $UO_2$-, $PuO_2$-, $ThO_2$-, $(U, Pu)O_2$- und $(U, Th)O_2$-Pulver verwendet werden, deren Gesamtgehalt an Fluor kleiner als 100 ppm ist.

4. Verfahren nach Anspruch 1, dadurch gekennzeichnet, daß Mischungskomponenten $UO_2$-, $PuO_2$-, $ThO_2$-, $(U, Pu)O_2$- und $(U, Th)O_2$-Pulver verwendet werden mit einem mittleren Partikeldurchmesser im Bereich von 5 µm bis 100 µm.

## Claims

1. Process for the production of a sintered nuclear fuel body from $UO_2$ or the mixed oxides $(U, Pu)O_2$ and $(U, Th)O_2$ having neutron poison in the chemical compound form $UB_x$ (x = 2;4 and/or 12) and/or $B_4C$, which is embedded in the sintered matrix, by sintering a compact of a mixture of at least one of the mixture components $UO_2$-, $PuO_2$-, $ThO_2$-, $(U, Pu)O_2$- and $(U, Th)O_2$-powder with $UB_x$-powder (x = 2;4 and/or 12) and/or $B_4C$-powder, characterised in that the compact is first of all sintered at a treatment temperature in the range from 1000°C to 1400°C in an oxidising sintering atmosphere and is then heat treated in a reducing gas atmosphere.

2. Process according to claim 1, characterised in that carbon dioxide is used as an oxidising sintering atmosphere and hydrogen is used as a reducing gas atmosphere.

3. Process according to claim 1, characterised in that mixture components $UO_2$-, $PuO_2$-, $ThO_2$-, $(U, Pu)O_2$- and $(U, Th)O_2$-powder are used, their total fluorine content being less than 100 ppm.

4. Process according to claim 1, characterised in that mixture components $UO_2$-, $PuO_2$-, $ThO_2$-, $(U, Pu)O_2$- and $(U, Th)O_2$-powder are used which have an average particle diameter in the range from 5 µm to 100 µm.

## Revendications

1. Procédé de fabrication d'un corps fritté de combustible nucléaire en $UO_2$ ou en les oxydes mixtes que sont $(U, Pu)O_2$ et $(U, Th)O_2$ avec un poison nucléaire qui est incorporé à la matrice de frittage, sous la forme chimique des composés $UB_x$ (x = 2 ; 4 et/ou $B_4C$, par frittage d'un corps comprimé en un mélange d'au moins l'un des constituants du mélange que sont les poudres de $UO_2$, de $PuO_2$, de $ThO_2$, de $(U, Pu)O_2$ et de U, Th)$O_2$, et d'une poudre de $UB_x$ (x = 2 ; 4 et/ou 12) et/ou d'une poudre de $B_4C$, caractérisé, en ce qu'il consiste à fritter le corps comprimé à une température de traitement comprise entre 1000°C et 1400°C, d'abord dans une atmosphère de frittage oxydante, et ensuite à le traiter thermiquement dans une atmosphère gazeuse réductrice.

2. Procédé suivant la revendication 1, caractérisé en ce qu'il consiste à utiliser, comme atmosphère de frittage oxydante, du dioxyde de carbone et, comme atmosphère gazeuse réductrice, de l'hydrogène.

3. Procédé suivant la revendication 1, caractérisé en ce qu'il consiste à utiliser les constituants du mélange que sont les poudres $UO_2$, de $PuO_2$, de $ThO_2$, de $(U, Pu)O_2$ et de $(U, Th)O_2$, dont la teneur totale en fluor est inférieure à 100 ppm.

4. Procédé suivant la revendication 1, caractérisé, en ce qu'il consiste à utiliser les constituants du mélange que sont les poudres de $UO_2$, de $PuO_2$, de $ThO_2$, de $(U, Pu)O_2$ et de $(U, Th)O_2$, avec un diamètre moyen de particule compris entre 5 µm et 100 µm.